# FASCICULE DE BREVET EUROPEEN

(11) **EP 2 203 231 B1**
(45) Date de publication et mention de la délivrance du brevet: **10.08.2011**
(21) Numéro de dépôt: 07848289.0
(22) Date de dépôt: 26.09.2007
(51) Int. Cl.: B01D 33/23, B01D 33/80

(54) **DISPOSITIF DE FILTRATION A DISQUES**
SCHEIBENFILTRATIONSVORRICHTUNG
DISC FILTRATION DEVICE

(43) Date de publication de la demande: 07.07.2010
(73) Titulaire: Gaudfrin, 78100 St. Germain en Laye (FR)
(72) Inventeur: GAUDFRIN, Guy, F-78860 Saint Nom la Bretèche (FR)
(74) Mandataire: Busnel, Jean-Benoît
(86) Numéro de dépôt international: PCT/FR2007/001575
(87) Numéro de publication internationale: WO 2009/040482

(56) Documents cités:
- DE-A1- 2 251 021
- FR-A- 2 595 957
- FR-A- 2 779 973
- US-A- 2 696 916
- US-A- 3 692 181
- US-A1- 2005 121 381

## Description

La présente invention concerne un dispositif de filtration à disques et son procédé d'assemblage et de maintenance.

Parmi les dispositifs utilisés pour la séparation liquide/solide d'une suspension chargée à l'échelle industrielle, il existe notamment des disques de grand diamètre, munis d'une jante coiffant et rigidifiant une pluralité de secteurs filtrants en les encerclant.

Ces secteurs sont généralement entoilés et pourvus de tubulures susceptibles d'être raccordées à la paroi externe d'un arbre central rotatif en débouchant dans des canaux intérieurs d'évacuation du liquide filtré.

Ces disques sont disposés verticalement et mis en rotation avec leur partie basse immergée dans des cuves contenant les suspensions à filtrer tandis que les canaux intérieurs de l'arbre sont mis successivement en dépression puis en surpression pour détacher la fraction solide appelée aussi gâteau.

Les secteurs sont fixés à l'arbre par différents moyens dont on peut citer celui consistant à engager leur tubulure de sortie dotée d'un embout dans les orifices d'une couronne solidaire de l'arbre et à emboîter leur embout dans les piquages de la paroi externe dudit arbre qui débouchent dans les dits canaux intérieurs. Un manchon en caoutchouc assure généralement l'étanchéité de la liaison entre les tubulures et les piquages.

Une échancrure dans les trous de la couronne permet de passer un ergot solidaire de la tubulure du secteur qui, après un quart de tour, se trouve emprisonné par la dite couronne et maintient le secteur en place.

De tels dispositifs sont décrits, en particulier, dans le FR 2 779 973.

Cependant la construction de tels dispositifs soulève un problème de tolérance de positionnement de l'ergot de la tubulure des secteurs qui se trouvent exposés de ce fait à un risque de déformation mécanique. Ce risque est d'autant plus élevé que l'on est amené à forcer la rotation lors du quart de tour nécessaire à leur mise en place. Il se révèle également un problème de retenue des éléments curvilignes constituant la jante pendant leur installation qui est rendue difficile de ce fait et se trouve exposée à des risques de démantèlement avant que tous les éléments ne soient raccordés entre eux.

Un autre inconvénient réside dans l'utilisation de vis filetées dans la jante pour caler les secteurs entre eux. Ces vis ne permettent pas de maîtriser les efforts engendrés tant sur les secteurs que sur la jante, ni de les répartir correctement dans l'ensemble du disque. Or, ces efforts se trouvent à l'origine de déformations, voir même de ruptures, tant de la part des secteurs que de la jante.

Cet inconvénient est encore plus tangible lorsqu'il s'agit de la construction de disques de très grandes dimensions qui doivent présenter pourtant une structure légère nécessaire au montage manuel des secteurs.

En outre ces dispositifs antérieurs ne permettent pas une maintenance facile du fait notamment que le remplacement d'un seul ou plusieurs secteurs filtrants usagés ou détériorés nécessite le démontage de la jante pour extraire la tubulure du secteur de son encastrement dans l'arbre.

La présente invention a pour but de résoudre les problèmes techniques posés par les dispositifs de l'art antérieur en offrant des modes d'assemblage et de démontage simples, rapides et rationnels des secteurs.

Ce but est atteint, selon l'invention, au moyen d'un dispositif de filtration caractérisé en ce que ladite jante est pourvue d'orifices destinés à recevoir chacun une bride de liaison amovible portant, d'une part une entretoise radiale coincée entre deux secteurs adjacents pour assurer leur calage relatif, et coopérant d'autre part avec une attache rapide à ressort pour verrouiller l'entretoise, sous tension, entre les secteurs.

Selon une caractéristique avantageuse, les secteurs filtrants sont logés dans des poches triangulaires en toile filtrante dont les bords extérieurs sont rabattus de part et d'autre du secteur et fixés à l'aide de pinces-toile.

Selon une autre caractéristique avantageuse, lesdits pinces-toile comportent des flancs latéraux formant mâchoire et, à leurs extrémités longitudinales, des languettes élastiques bordant lesdits secteurs.

Ces languettes recouvrent les plis formés à l'angle de la poche pour lesquels un espace suffisant a été ménagé en tronquant légèrement les angles du secteur. Les poches habillant les secteurs sont ainsi refermées sur leur bord extérieur par les pinces-toile à effet de ressort qui assurent une fermeture simple, efficace et sure sans avoir à recourir à une couture ou à un autre procédé fastidieux

Selon une variante particulière de réalisation, lesdits secteurs comprennent une ossature montée à l'intérieur d'un cadre et soutenant la toile filtrante.

De préférence, les mâchoires des pinces-toile prennent appui sur la seule ossature et ne s'étendent pas jusqu'au cadre.

Selon une autre variante, ladite jante est constituée d'un profilé de section en U dont les branches sont orientées vers l'extérieur et dont la largeur est très supérieure à l'épaisseur des secteurs.

Les branches du U sont tournées vers l'extérieur et non pas vers l'intérieur du disque pour ne pas gêner le déchargement du gâteau.

La largeur de la jante permet d'accroître la rigidité du disque d'une part et de provoquer une agitation de la suspension d'autre part.

Avantageusement, ladite jante est formée de l'assemblage de plusieurs éléments de profilés curvilignes mis bout à bout, et, de préférence, de huit éléments de profilé.

Selon encore une autre caractéristique avantageuse, le dispositif comprend une couronne formée d'une partie fixe solidaire dudit arbre et d'une partie amovible qui, après assemblage, délimitent, à distance desdits piquages, des carcans destinés à supporter les extrémités des secteurs.

De préférence, la partie amovible de la couronne est divisée en plusieurs éléments indépendants comportant chacun un serre-joint qui assure le blocage définitif des secteurs après montage.

Selon une autre caractéristique, la bride de liaison a des dimensions lui permettant de coulisser dans l'orifice de la jante pour venir coiffer le bord extérieur de deux secteurs adjacents de façon à les ajuster et les raccorder à la jante.

Il est prévu que l'attache rapide soit formée de deux tiges en épingle prenant appui sur l'entretoise de la bride et dont l'extrémité en boucle est engagée dans une fente de la jante tandis que ses extrémités libres, portant des crochets, sont introduites et bloquées dans des lumières ménagées dans la jante.

L'attache rapide forme ainsi un ressort engagé dans différents orifices pratiqués dans la jante de part et d'autre du logement de la bride de liaison sur laquelle ce ressort applique une pression mesurée lors du verrouillage.

L'action conjointe des languettes élastiques, des pinces-toile, de l'entretoise en V de la bride de liaison et de l'attache rapide de verrouillage à effet de ressort limitent toutes les contraintes excessives susceptibles d'endommager les secteurs et de déformer la jante.

Un autre objet de l'invention est un procédé d'assemblage et de maintenance d'un dispositif de filtration du type décrit ci-dessus.

Le procédé de l'invention prévoit que l'on réalise la couronne de support en deux parties dont l'une est solidaire de l'arbre et l'autre est amovible, que l'on effectue le montage, sur les piquages de l'arbre et sur la partie fixe de la couronne, d'une série de rayons assurant le support de la jante, que l'on fixe la jante sur les extrémités des rayons adjacents à l'intérieur de la jante puis que l'on remplace successivement lesdits rayons par les secteurs jusqu'au garnissage complet du disque.

Le montage de la jante sur les rayons est provisoire et permet d'assurer la stabilité du disque avant et pendant le montage des secteurs.

Il est, en outre, prévu que l'on fixe la jante sur les rayons en assemblant conjointement des éléments curvilignes mis bout à bout.

Selon une variante de mise en oeuvre, on fixe tout d'abord, sur lesdites tubulures, un anneau périphérique de retenue destiné à coopérer avec des encoches ménagées sur lesdites parties fixe et amovible de la couronne de support.

L'anneau de retenue se glisse à l'intérieur de la couronne et supporte, pendant la rotation du disque, le poids du secteur qui, de cette manière, n'est pas reporté sur la jante.

Selon une caractéristique du procédé, on installe les secteurs en les amenant parallèlement au plan du disque, on introduit ensuite leurs embouts dans les piquages avec une légère inclinaison relativement audit plan tout en les rabattant à l'intérieur de la jante et en engageant les tubulures dans la couronne, on verrouille les secteurs à la jante par l'intermédiaire de brides de liaison et d'attaches rapides puis on monte la partie amovible sur la partie fixe de la couronne.

Les secteurs sont ainsi maintenus par la jante au moyen de brides de liaison appliquées et verrouillées grâce aux attaches rapides à ressort.

En dernier lieu, les éléments de la partie amovible de la couronne sont raccordés à la partie solidaire de l'arbre par des serre-joints assurant le blocage définitif de l'ensemble du disque et interdisant ainsi sa mise en parapluie.

Selon une autre variante de mise en oeuvre spécifique à la maintenance, on dégage la partie amovible de la couronne, on libère les brides de liaison correspondant aux secteurs à remplacer, on enlève ensuite les secteurs un par un en les inclinant légèrement et en sortant les embouts des piquages tout en installant, conjointement et au fur et à mesure, de nouveaux secteurs de telle sorte que la jante reste soutenue en permanence.

Le dispositif de l'invention permet une maintenance aisée de l'installation de filtration en rendant possible le remplacement d'un secteur indépendamment des autres et ce, sans quart de tour et sans démontage de la jante.

En outre, le procédé de l'invention supprime les risques de chute des éléments de jante ou de déformation des secteurs lors des étapes de garnissage du disque en assurant une tenue mécanique stable de cette dernière avant même le montage desdits secteurs et en permettant leur mise en place sans nécessité du quart de tour pour l'emprisonner dans la couronne.

Le montage peut ainsi être effectué par un seul opérateur.

La jante est donc montée une fois pour toutes.

De par le nouveau mode de fixation et de verrouillage des secteurs qui libère la jante non seulement du poids des secteurs et de leurs gâteaux de filtration, mais aussi de toutes contraintes mécaniques d'assemblage accidentelles grâce, en particulier, aux attaches rapides à ressort, la jante confère ainsi au disque une plus grande rigidité et une meilleure tenue d'autant plus nécessaires que le disque est de grandes dimensions.

L'invention sera mieux comprise à la lecture de la description qui va suivre, en se référant aux dessins annexés sur lesquels :
La figure 1 représente une vue de face d'un mode de réalisation du dispositif de filtration de l'invention avec le disque filtrant et l'arbre central de support en coupe transversale,
La figure 2 représente une vue en coupe selon II-II du dispositif de la figure 1,
La figure 3A est une vue de dessus de la couronne solidaire de l'arbre et des éléments de couronne amovibles avec leur serre-joint représentés séparément,
La figure 3B est une coupe selon IIIb-IIIb de la figure 3A,
La figure 3C est une vue de dessus de la couronne solidaire de l'arbre et des éléments de couronne amovibles avec leur serre-joint représentés accouplés comme ils le sont après installation des secteurs qui ne sont pas représentés sur ladite figure,
La figure 3D est une coupe selon IIId-IIId de la figure 3C.
Les figures 4A, 4B et 4C représentent des vues latérales respectives des trois premières phases du procédé de l'invention relatives au montage d'un secteur du disque.
Les figures 5A, 5B, 5C et 5D représentent des vues partielles, respectivement latérales et en coupes selon Vb-Vb, Vc-Vc, Vd-Vd des moyens de verrouillage des secteurs sur la jante,
La figure 5E représente également les moyens de verrouillage avec la bride de liaison écartée avant le verrouillage. La bride est montrée en coupe pour plus de clarté,
La figure 6A représente une vue d'un disque en phase d'assemblage avant retrait des rayons provisoires et avant montage des derniers secteurs prenant la place des rayons,
Les figures 6B et 6C représentent des vues de détail du système de fixation des rayons,
Les figures 7A et 7B représentent latéralement et en coupe le pince-toile qui ferme la toile filtrante sur le secteur avec en trait plus fin une vue partielle du secteur sans sa toile de façon à illustrer le rôle de l'échancrure pratiquée dans le pince-toile.
Les figures 8A, 8B et 8C représentent la méthode de montage du pince-toile avec un outil P adapté à son ouverture avant clipsage sur la toile.

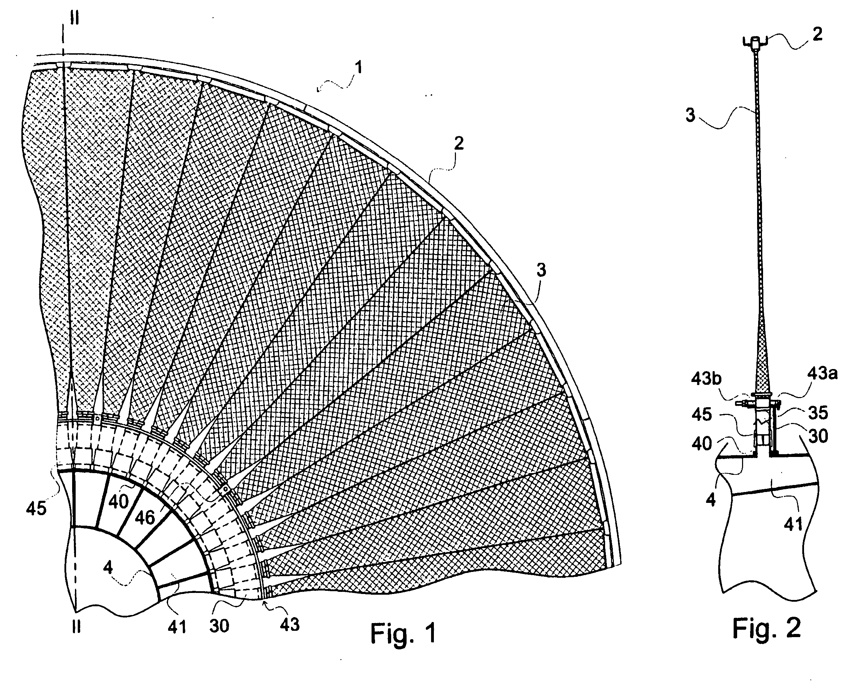

Le dispositif de filtration représenté sur les figures 1 et 2 comprend un disque 1 muni d'une jante 2 retenant une pluralité de secteurs filtrants 3.

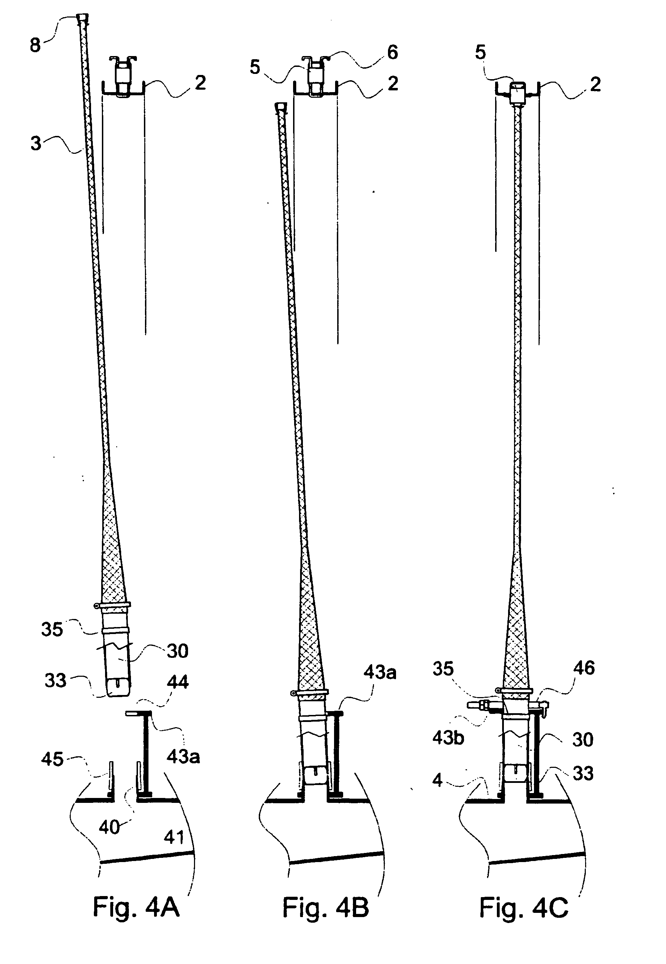

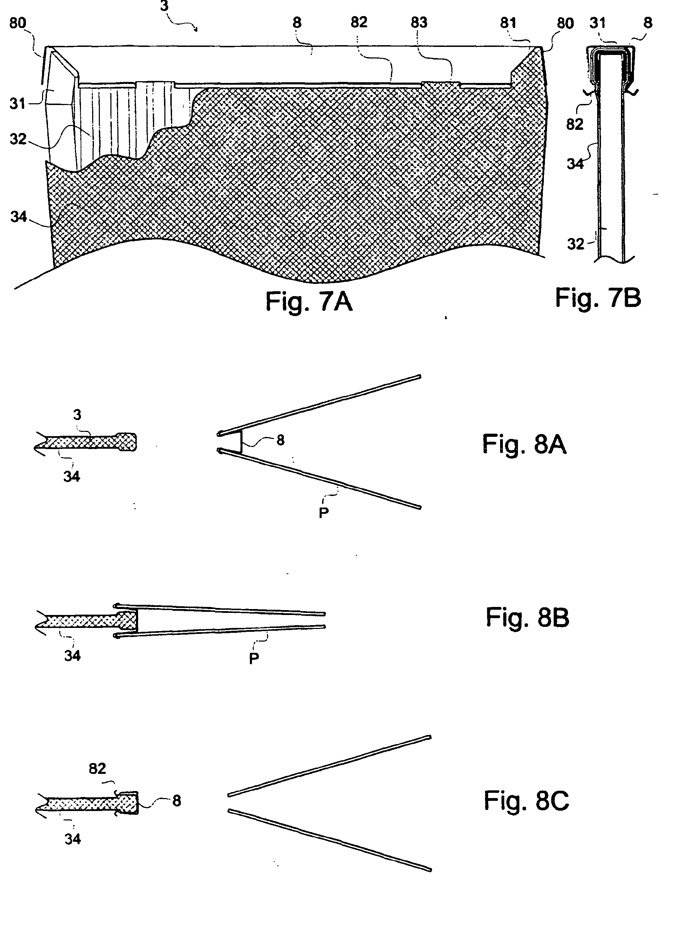

Les secteurs 3 sont constitués chacun d'un cadre triangulaire 31 réalisé avec un profilé en U insérant une ossature 32 chargée de drainer les filtrats vers la tubulure de sortie 30 dotée d'un embout 33 comme représenté, notamment, sur les figures 4A à 4C, 7A et 7B.

Les secteurs 3 sont enfilés et logés dans une poche triangulaire 34 confectionnée à partir d'une toile filtrante ouverte à la base du triangle.

Cette poche est refermée ensuite en rabattant la toile de part et d'autre du bord extérieur du secteur et en coinçant le tissu à l'aide d'un pince-toile 8 dans le coin formé par l'ossature 32 soutenant la toile et le cadre 31 en U du secteur 3 qui la recouvre comme représenté sur la figure 7B.

Le pince-toile 8 est réalisé avec un profilé de section en U dont les flancs forment une mâchoire 82. Cette mâchoire s'arrête avant le cadre 31 du secteur de manière à ce qu'elle vienne se refermer uniquement sur l'ossature 32 comme représenté sur les figures 7A et 7B.

Les secteurs filtrants 3 sont raccordés à leur extrémité radiale dite aussi tubulure de sortie 30 à des piquages 40 ménagés en saillie sur la paroi externe d'un arbre central rotatif 4 comme le montre la figure 2.

Ces piquages 40 communiquent avec des canaux intérieurs d'évacuation 41 réalisés longitudinalement dans le volume intérieur de l'arbre.

Comme représenté notamment sur les figures 2 et 4A à 4C, l'extrémité radialement intérieure 30 des secteurs 3 vient s'emboiter de manière coulissante dans un manchon élastique 45 fixé sur les piquages 40, tandis que l'embout 33 s'emboite dans le dit piquage.

Des couronnes, réalisées en deux parties dont l'une 43a est solidaire de l'arbre 4 et l'autre 43b est amovible, sont coaxiales audit arbre et situées à distance des piquages 40.

La partie fixe 43a est rendue solidaire de l'arbre par l'intermédiaire d'une plaque annulaire parallèle au plan des secteurs.

Chacune des parties 43a, 43b comporte des encoches hémicylindriques 44.

Lorsque les deux parties sont réunies, les encoches sont refermées de façon à entourer et enserrer les tubulures 30 à la manière de carcans. Les parties 43a, 43b de la couronne comportent donc autant d'encoches 44 qu'il y a de piquages sur l'arbre 4.

Les carcans formés dans la couronne par la mise en regard des encoches 44 sont parfaitement axés radialement sur les piquages 40.

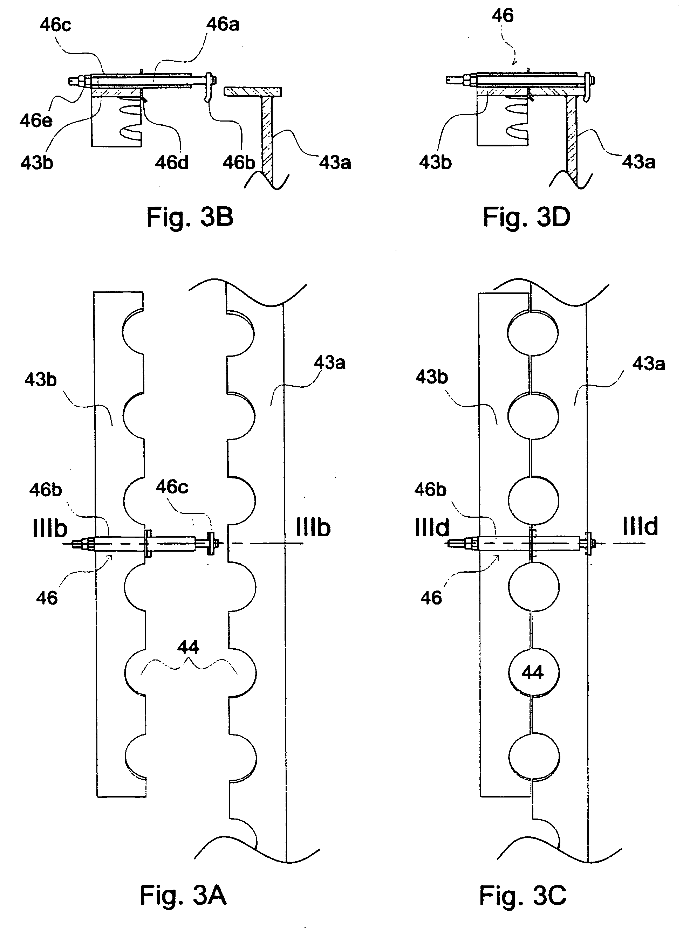

La partie amovible 43b de la couronne est réalisée de préférence en plusieurs éléments séparables dotés chacun d'un serre-joint 46 comme représenté en particulier par les figures 3A et 3B.

Chaque élément de la partie amovible est retiré pour permettre le passage des secteurs 3 correspondant en cours de montage et remonté ensuite pour bloquer lesdits secteurs à l'aide du serre-joint 46.

Le serre-joint 46 est constitué par une tige 46a filetée à une extrémité et pourvue d'un crampon 46b à l'autre extrémité.

La tige 46a est engagée dans un tube transversal 46c de section carrée solidaire de chacun des éléments de la partie amovible 43b de la couronne.

Une rondelle 46d à trou carré et repliée pour former un crampon à l'inverse de celui de la tige est glissée sur le tube transversal 46c.

La tige 46a coopère avec les contre-écrous 46e permettant par serrage de solidariser par cramponnement les deux parties 43a et 43b comme représenté sur les figures 3C, 3D et 4C.

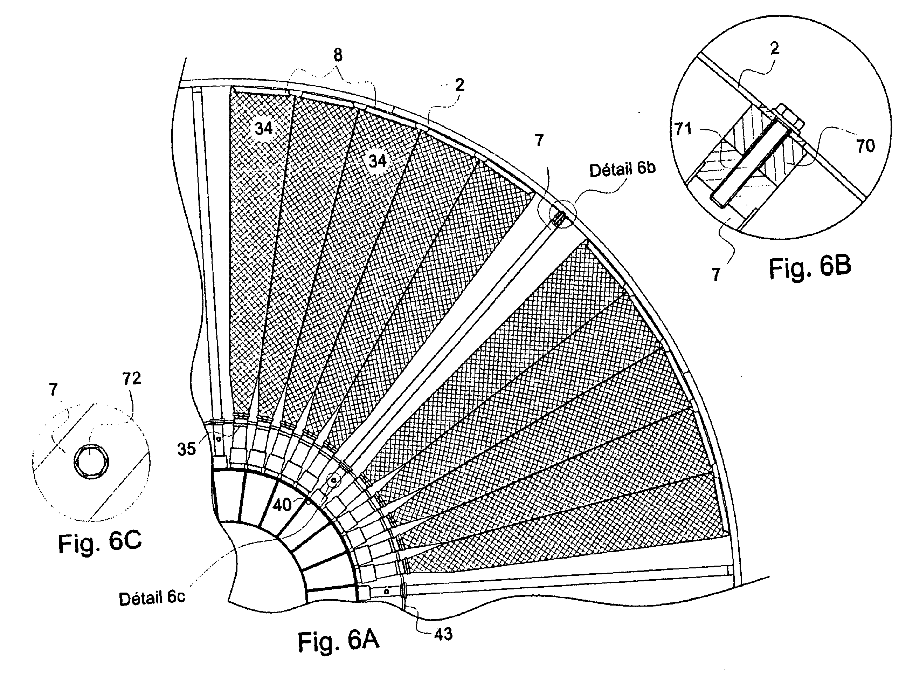

Le procédé d'assemblage de l'invention est mis en oeuvre de la manière suivante :
On effectue le montage d'une série de rayons 7 destinés à assurer le support provisoire de la jante 2 en les emboîtant dans les piquages 40 et en les fixant à la couronne à l'aide de vis 72 comme représenté sur les figures 6A, 6B et 6C.

Dans le mode de montage représenté sur les figures 6A, 6B et 6C on dispose plusieurs rayons 7, par exemple huit, autour de l'arbre 4 à des positions angulaires équidistantes.

On fixe la jante 2 sur les extrémités des rayons 7 avec les vis 71. Des entretoises 70 sont, éventuellement, placées entre les rayons et les tronçons de la jante pour faciliter le démontage des rayons après l'assemblage de la jante.

On installe ensuite les secteurs filtrants 3 un à un sur les piquages libres d'abord entre les rayons 7 adjacents à l'intérieur de la jante 2 puis en lieu et place des rayons jusqu'au garnissage complet du disque 1.

L'opération de fixation de la jante 2 sur les rayons 7 est effectuée en assemblant conjointement plusieurs tronçons de profilés curvilignes, par exemple huit, mis bout à bout. Ces profilés présentent une section en U dont les branches sont orientées vers l'extérieur du disque 1.

L'installation des secteurs 3 est effectuée comme représenté sur la figure 4A en les amenant parallèlement au plan du disque 1.

On introduit ensuite les embouts d'encastrement 33 dans les piquages 40 pourvus préalablement d'un manchon 45 comme représenté sur la figure 4B.

Cette introduction s'effectue avec une légère inclinaison, de quelques degrés seulement par rapport au plan du disque, du fait de la présence de la jante 2.

Après raccordement, on rabat le secteur à l'intérieur de la jante 2 tout en emboîtant la tubulure 30 dans l'encoche 44 de la partie fixe 43a de la couronne 43, l'anneau de retenue 35 se retrouvant alors sous ladite couronne.

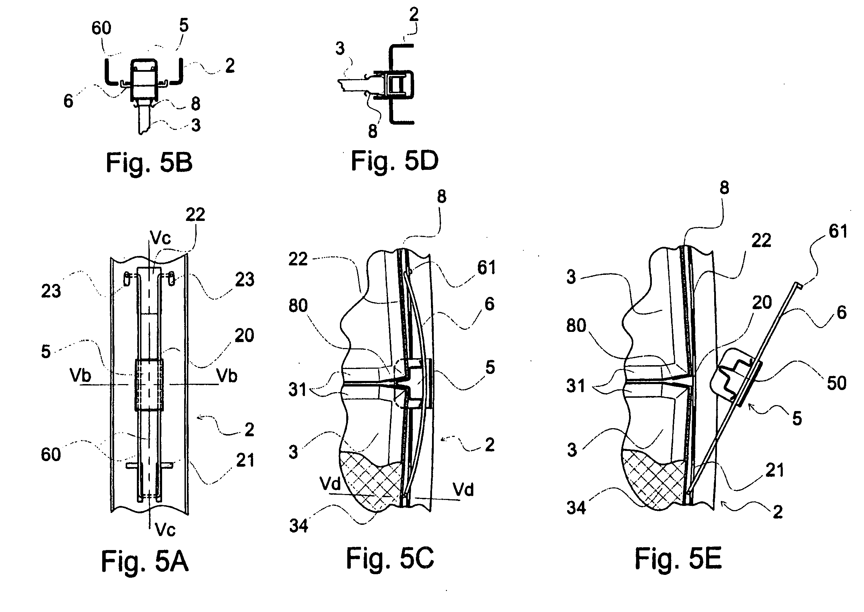

On verrouille par la suite les secteurs 3, comme représenté sur la figure 4C, en fixant leur bord extérieur à la jante 2 au moyen de brides de liaison amovibles 5 représentées en détail sur les figures 5A, 5B, 5C, 5D et 5E et dont l'utilisation est décrite ci-après.

Puis on rapporte la partie amovible 43b de la couronne que l'on assemble à la partie fixe 43a au moyen des serre-joints 46.

La jante 2 est pourvue d'orifices 20 destinés à recevoir chacun une bride de liaison amovible 5 comme représenté sur les figures 5A, 5B, 5C, 5D et 5E.

La bride de liaison 5 a des dimensions légèrement inférieures à celles de l'orifice 20 de la jante 2 lui permettant de coulisser ainsi pour venir coiffer les pinces-toile 8 en enserrant le bord extérieur des secteurs 3 adjacents, puis aligner lesdits secteurs et les rattacher à la jante 2 de cette façon.

Les brides 5 portent une entretoise radiale 50 qui est destinée à se coincer entre deux secteurs 3 adjacents pour assurer leur calage en s'insérant entre les languettes élastiques 80 du pince toile 8.

La bride de liaison 5 est maintenue en place à l'aide d'une attache rapide 6 à effet de ressort qui assure le verrouillage de manière pondérée en évitant toute déformation mécanique qu'un verrouillage par écrou, par exemple, pourrait provoquer.

Les brides 5 sont réalisées sous forme de pièces représentées sur les figures 5A, 5B, 5C, 5D et 5E dont la largeur intérieure est légèrement supérieure à celle des pinces toiles 8 qui garnissent le bord extérieur des secteurs.

L'entretoise 50 située au centre de la pièce présente un profil en V qui vient écarter les languettes élastiques 80 des pinces-toiles 8 enserrant le bord extérieur des secteurs 3, sous l'action de compression exercée par l'attache rapide à ressort 6.

Les attaches rapides 6 selon les figures 5A, 5B, 5C, 5D et 5E comportent deux tiges 60 en épingle à cheveux avec deux extrémités libres et une extrémité opposée en boucle fermée. Ces attaches sont réalisées à partir d'un fil à ressort de section choisie en vue de l'effort à fournir.

Les tiges 60 prennent appui sur l'entretoise 50 de la bride 5 tandis que l'extrémité en boucle est engagée dans une fente 21 de la jante 2 et les extrémités libres, portant des crochets 61, sont introduites et bloquées respectivement dans des lumières 22 et 23 ménagées au travers de la jante 2.

Les deux tiges 60 sont d'abord introduites à l'intérieur de la bride 5 en les resserrant pour laisser passer les crochets 61.

La bride 5 se trouve reliée à l'attache 6 après redéploiement élastique des tiges et ne peut s'en échapper par inadvertance comme cela est représenté en particulier par la figure 5E.

Dès que deux secteurs adjacents sont rabattus dans la jante 2, la bride 5 est introduite par l'orifice 20 pour venir les coiffer et les maintenir dans le plan du disque. Les extrémités des deux tiges qui se terminent par les crochets 61 sont ensuite passées par la lumière 22 et engagées à force dans les lumières 23 pour réaliser ainsi un parfait verrouillage.

Les deux tiges s'appliquent avec force sur l'entretoise 50 de la bride 5 qui se trouve poussée sous contrainte entre les languettes élastiques 80 du pince-toile 8 à la manière d'un coin.

Au fur et à mesure que les secteurs 3 sont installés et raccordés à la jante 2, ils sont bloqués à leur base avec les éléments de la partie amovible 43b de la couronne par l'intermédiaire de leurs serre-joints 46.

On réalise de cette façon un calage élastique et donc modéré des secteurs 3 entre eux sans engendrer d'effort excessif.

De même, la résistance qu'éprouve la jante 2 pendant sa rotation dans la cuve remplie de la suspension à filtrer qui peut être très épaisse, se trouve ainsi convenablement répartie sur tous les secteurs 3.

Pour remplacer un ou plusieurs secteurs 3 voire la totalité, on retire le ou les éléments correspondants de la demi-couronne 43b, on libère les brides de liaison 5 qui rattachent les secteurs à la jante 2 et on les dégage ensuite un par un en les inclinant légèrement et en les sortant des piquages 40 et des manchons 45.

On prend soin de réinstaller les nouveaux secteurs au fur et à mesure pour ne pas libérer un espace de plus de trois ou quatre secteurs, par exemple, afin que la jante 2 reste suffisamment soutenue pendant l'opération.

## Revendications

1. Dispositif de filtration comprenant un disque (1) muni d'une jante (2) coiffant et rigidifiant une pluralité de secteurs filtrants (3) raccordés à des piquages (40) ménagés sur la paroi externe d'un arbre central rotatif (4) renfermant des canaux intérieurs d'évacuation (41), **caractérisé en ce que** ladite jante (2) est pourvue d'orifices (20) destinés à recevoir chacun une bride de liaison amovible (5) portant, d'une part, une entretoise radiale (50) coincée entre deux secteurs adjacents (3) pour assurer leur calage relatif et coopérant, d'autre part, avec une attache rapide à ressort (6) pour verrouiller l'entretoise (50), sous tension, entre les secteurs (3).

2. Dispositif selon la revendication 1 **caractérisé en ce que** les secteurs filtrants (3) sont logés dans des poches triangulaires (34) en toile filtrante dont les bords extérieurs sont rabattus de part et d'autre du secteur et fixés à l'aide de pinces-toile (8).

3. Dispositif selon la revendication 2 **caractérisé en ce que** lesdits pinces-toile (8) comportent des flancs latéraux formant mâchoire (82) et, à leurs extrémités longitudinales, des languettes élastiques (80) bordant lesdits secteurs.

4. Dispositif selon l'une des revendications 2 ou 3 **caractérisé en ce que** lesdits secteurs comprennent une ossature (32) montée à l'intérieur d'un cadre (31) et soutenant la toile filtrante.

5. Dispositif selon la revendication 4 **caractérisé en ce que** les mâchoires (82) des pince-toiles (8) prennent appui sur la seule ossature (32) et ne s'étendent pas jusqu'au cadre (31).

6. Dispositif selon l'une des revendications précédentes **caractérisé en ce que** ladite jante (2) est constituée d'un profilé de section en U dont les branches sont orientées vers l'extérieur et dont la largeur est très supérieure à l'épaisseur des secteurs (3).

7. Dispositif selon l'une des revendications précédentes **caractérisé en ce qu'**il comprend une couronne (43) formée d'une partie fixe (43a) solidaire dudit arbre (4) et d'une partie amovible (43b) qui, après assemblage, délimitent, à distance desdits piquages (40), des carcans (44) destinés à supporter les extrémités (30) des secteurs (3).

8. Dispositif selon la revendication 7 **caractérisé en ce que** la partie amovible (43b) de la couronne est divisée en plusieurs éléments indépendants comportant chacun un serre-joint (46) qui assure le blocage définitif des secteurs (3) après montage.

9. Dispositif selon la revendication 7 ou 8 **caractérisé en ce qu'**il comprend une série de rayons (7) montés de façon provisoire sur les piquages (40) de l'arbre (4) et sur la partie fixe (43a) de la couronne (43) et assurant le support et la fixation de la jante (2).

10. Dispositif selon l'une des revendications précédentes **caractérisé en ce que** les extrémités inférieures des secteurs (3) sont pourvue respectivement d'une tubulure (30) et d'un embout (33).

11. Dispositif selon les revendications 7 et 10 **caractérisé en ce que** lesdites tubulures (30) comprennent un anneau périphérique de retenue (35) destiné à coopérer avec des encoches (44) ménagées sur lesdites parties fixe (43a) et amovible (43b) de la couronne de support.

12. Dispositif selon l'une des revendications précédentes **caractérisé en ce que** ladite jante (2) est formée de l'assemblage de plusieurs éléments de profilés curvilignes mis bout à bout.

13. Dispositif selon la revendication 12 **caractérisé en ce que** la jante (2) comporte huit éléments de profilé.

14. Dispositif selon l'une des revendications précédentes **caractérisé en ce que** ladite bride de liaison (5) a des dimensions lui permettant de coulisser dans l'orifice (20) de la jante (2) pour venir coiffer le bord extérieur de deux secteurs adjacents de façon à les ajuster et les raccorder à la jante (2).

15. Dispositif selon l'une des revendications précédentes **caractérisé en ce que** l'attache rapide (6) est formée de deux tiges (60) en épingle prenant appui sur l'entretoise (50) de la bride (5) et dont l'extrémité en boucle est engagée dans une fente (21) de la jante (2) tandis que ses extrémités libres, portant des crochets (61), sont introduites et bloquées dans des lumières (22 et 23) ménagées dans la jante (2).

16. Procédé d'installation d'un dispositif selon la revendication 9 **caractérisé en ce qu'**on effectue le montage d'une série de rayons (7) sur les piquages (40) de l'arbre (4) et sur la partie fixe (43a) de la couronne (43), on fixe provisoirement la jante (2) sur les extrémités des rayons (7) puis on remplace successivement lesdits rayons par les secteurs (3) jusqu'à garnissage complet du disque.

17. Procédé de maintenance d'un dispositif selon les revendications 7 et 10 **caractérisé en ce qu'**on installe les secteurs (3) en les amenant parallèlement au plan du disque (1), on introduit ensuite leurs extrémités inférieures dans les piquages (40) avec une légère inclinaison relativement audit plan tout en les rabattant à l'intérieur de la jante (2) et en engageant les tubulures (30) dans la couronne (43), on verrouille les secteurs à la jante (2) par l'intermédiaire des brides de liaison (5) et des attaches rapides (6) puis on monte la partie amovible (43b) sur la partie fixe (43a) de la couronne.

18. Procédé selon la revendication 17 **caractérisé en ce qu'**on dégage la partie amovible (43b) de la couronne, on libère les brides de liaison (5) correspondant aux secteurs à remplacer, on enlève ensuite les secteurs un par un en les inclinant légèrement et en sortant les embouts (33) des piquages (40) tout en installant, conjointement et au fur et à mesure, de nouveaux secteurs de telle sorte que la jante (2) reste soutenue en permanence.

## Claims

1. A filtration device comprising a disk (1) provided with a rim (2) covering and rigidifying a plurality of filtering sectors (3) connected to tappings (40) provided on the outer wall of a central rotating shaft (4) enclosing internal evacuation channels (41), **characterized in that** said rim (2) is provided with openings (20) each for receiving a removable connecting flange (5) bearing, on one hand, a radial spacer (50) stuck between two adjacent sectors (3) in order to ensure their relative wedging, and cooperating on the other hand, with a quick-disconnect spring fastener (6) in order to lock the spacer (50), under tension, between the sectors (3).

2. The device according to claim 1 **characterized in that** the filtering sectors (3) are housed in triangular pockets (34) of filter cloth whereof the external edges are folded on either side of the sector and fixed with cloth clamps (8).

3. The device according to claim 2 **characterized in that** said cloth clamps (8) comprise lateral flanks forming a breaker (82) and, at their longitudinal ends, elastic tongues (80) bordering said sectors.

4. The device according to any one of claims 2 or 3 **characterized in that** said sectors comprise a framework (32) mounted within a frame (31) and supporting the filter cloth.

5. The device according to claim 4 **characterized in that** the breakers (82) of the cloth clamps (8) press on the only framework (32) and do not extend to the frame (31).

6. The device according to any one of the preceding claims **characterized in that** said rim (2) is constituted of a U-section profile the branches of which are oriented outwards and whose width is much higher than the thickness of the sectors (3).

7. The device according to any one of the preceding claims **characterized in that** it comprises a crown (43) formed of a stationary portion (43a) secured to said shaft (4) and of a removable portion (43b) which, after assembly, delimit, at a distance of said tappings (40), casing clamps (44) for supporting the ends (30) of the sectors (3).

8. The device according to claim 7 **characterized in that** the removable portion (43b) of the crown is divided into several independent members each comprising a clamp (46) which ensures the permanent blocking of the sectors (3) after mounting.

9. The device according to claim 7 or 8 **characterized in that** it comprises a set of spokes (7) mounted temporarily on the tappings (40) of the shaft (4) and on the stationary portion (43a) of the crown (43) and ensuring the support and fixation of the rim (2).

10. The device according to any one of the preceding claims **characterized in that** the lower ends of the sectors (3) are respectively provided with a tubing (30) and a tip (33).

11. The device according to claims 7 and 10 **characterized in that** said tubings (30) comprise a peripheral restraining ring (35) for cooperating with notches (44) preserved on said stationary (43a) and removable (43b) portions of the support crown.

12. The device according to any one of the preceding claims **characterized in that** said rim (2) is formed by assembling several members of curvilinear profiles placed end to end.

13. The device according to claim 12 **characterized in that** the rim (2) comprises eight profile members.

14. The device according to any one of the preceding claims **characterized in that** said connecting flange (5) has dimensions which enable it to slide into the opening (20) of the rim (2) in order to cover the external edge of the two adjacent sectors such as to adjust them and connect them to the rim (2).

15. The device according to any one of the preceding claims **characterized in that** the quick-disconnect fastener (6) is formed of two pin-like stems (60) pressing against the spacer (50) of the flange (5) and whereof the looped end is engaged in a slot (21) of the rim (2) whereas its free ends, bearing hooks (61), are introduced and blocked into lumens (22 and 23) provided in the rim (2).

16. A method for installing a device according to claim 9 **characterized in that** a set of spokes (7) is assembled on tappings (40) of the shaft (4) and on the stationary portion (43a) of the crown (43), the rim (2) is temporarily fixed onto the ends of the spokes (7) then said spokes are successively replaced by the sectors (3) until complete packing of the disk.

17. A method for the maintenance of a device according to claims 7 and 10 **characterized in that** the sectors (3) are installed by bringing them parallely to the plan of the disk (1), then their lower ends are introduced into the tappings (40) with a slight inclination relatively to said plan while folding them inside the rim (2) and engaging the tubings (30) into the crown (43), the sectors are locked to the rim (2) by means of connecting flanges (5) and quick-disconnect fasteners (6) then the removable portion (43b) is mounted on the stationary portion (43a) of the crown.

18. The method according to claim 17 **characterized in that** the removable portion (43b) of the crown is cleared, the connecting flanges (5) corresponding to the sectors to be replaced are freed, then the sectors are removed one at a time by slightly tilting them and bringing out the tips (33) from the tappings (40) while installing, jointly and as one goes along, new sectors such that the rim (2) remains permanently sustained.

## Patentansprüche

1. Filtervorrichtung, umfassend eine Scheibe (1), die mit einer Felge (2) versehen ist, die eine Vielzahl von Filtersektoren (3) überdeckt und versteift, die mit Stichleitungen (40) verbunden sind, die auf der Außenwand einer mittleren Drehwelle (4) eingerichtet sind und innere Ablasskanäle (41) einschließen, **dadurch gekennzeichnet, dass** die Felge (2) mit Öffnungen (20) versehen ist, die dazu gedacht sind, jeweils einen abnehmbaren Verbindungsflansch (5) aufzunehmen, der einerseits einen radialen Steg (50) trägt, der zwischen zwei angrenzenden Sektoren (3) eingeklemmt ist, um ihre relative Festlegung sicherzustellen, und andererseits mit einem Federschnellverschluss (6) zusammenwirkt, um den Steg (50) unter Spannung zwischen den Sektoren (3) zu verriegeln.

2. Vorrichtung nach Anspruch 1, **dadurch gekennzeichnet, dass** die Filtersektoren (3) in dreieckigen Taschen (34) aus Filterstoff untergebracht sind, deren Außenränder auf beiden Seiten des Sektors umgeschlagen und anhand von Stoffklemmen (8) befestigt sind.

3. Vorrichtung nach Anspruch 2, **dadurch gekennzeichnet, dass** die Stoffklemmen (8) Backen (82) bildende Seitenflanken und an ihren Längsenden elastische Zungen (80), welche die Sektoren umranden, umfassen.

4. Vorrichtung nach einem der Ansprüche 2 oder 3, **dadurch gekennzeichnet, dass** die Sektoren ein Gerippe (32) umfassen, das im Innern eines Rahmens (31) montiert ist und den Filterstoff festhält.

5. Vorrichtung nach Anspruch 4, **dadurch gekennzeichnet, dass** die Backen (82) der Tuchklemmen (8) sich nur auf dem Gerippe (32) abstützen und sich nicht bis zum Rahmen (31) erstrecken.

6. Vorrichtung nach einem der vorhergehenden Ansprüche, **dadurch gekennzeichnet, dass** die Felge (2) aus einem Profil mit U-förmigem Querschnitt besteht, dessen Schenkel nach außen orientiert sind und dessen Breite viel größer ist als die Dicke der Sektoren (3).

7. Vorrichtung nach einem der vorhergehenden Ansprüche, **dadurch gekennzeichnet, dass** sie einen Kranz (43) umfasst, der aus einem festen Teil (43a), der mit der Welle (4) fest verbunden ist, und aus einem abnehmbaren Teil (43b) gebildet ist, die nach dem Zusammenbauen von den Stichleitungen (40) entfernt Bügel (44) begrenzen, die dazu gedacht sind, die Enden (30) der Sektoren (3) zu tragen.

8. Vorrichtung nach Anspruch 7, **dadurch gekennzeichnet, dass** der abnehmbare Teil (43b) des Kranzes in mehrere unabhängige Elemente unterteilt ist, die jeweils eine Spannzwinge (46) umfassen, die das endgültige Blockieren der Sektoren (3) nach der Montage sicherstellt.

9. Vorrichtung nach Anspruch 7 oder 8, **dadurch gekennzeichnet, dass** sie eine Reihe von Sprossen (7) umfasst, die vorläufig auf den Stichleitungen (40) der Welle (4) und auf dem festen Teil (43a) des Kranzes (43) montiert sind und die Halterung und Befestigung der Felge (2) sicherstellen.

10. Vorrichtung nach einem der vorhergehenden Ansprüche, **dadurch gekennzeichnet, dass** die unteren Enden der Sektoren (3) jeweils mit einem Stutzen (30) oder einem Ansatz (33) versehen sind.

11. Vorrichtung nach Anspruch 7 und 10, **dadurch gekennzeichnet, dass** die Stutzen (30) einen umlaufenden Haltering (35) umfassen, der dazu gedacht ist, mit Einkerbungen (44) zusammenzuwirken, die auf dem festen Teil (43a) und dem abnehmbaren Teil (43b) des Tragkranzes eingerichtet sind.

12. Vorrichtung nach einem der vorhergehenden Ansprüche, **dadurch gekennzeichnet, dass** die Felge (2) aus der Zusammenfügung von mehreren aneinander gereihten gekrümmten Profilelementen gebildet ist.

13. Vorrichtung nach Anspruch 12, **dadurch gekennzeichnet, dass** die Felge (2) acht Profilelemente umfasst.

14. Vorrichtung nach einem der vorhergehenden Ansprüche, **dadurch gekennzeichnet, dass** der Verbindungsflansch (5) Dimensionen aufweist, die es ihm ermöglichen, in der Öffnung (20) der Felge (2) zu gleiten, um den Außenrand von zwei angrenzenden Sektoren zu überdecken, um sie anzupassen und sie mit der Felge (2) zu verbinden.

15. Vorrichtung nach einem der vorhergehenden Ansprüche, **dadurch gekennzeichnet, dass** der Schnellverschluss (6) aus zwei Haarnadelstäben (60) gebildet ist, die sich an dem Steg (50) des Flansches (5) abstützen und deren schleifenförmiges Ende mit einem Spalt (21) der Felge (2) in Eingriff steht, während ihre freien Enden, die Haken (61) tragen, in Schlitzlöcher (22 und 23) eingeführt und blockiert sind, die in der Felge (2) eingerichtet sind.

16. Verfahren zum Installieren einer Vorrichtung nach Anspruch 9, **dadurch gekennzeichnet, dass** die Montage einer Reihe von Sprossen (7) auf den Stichleitungen (40) der Welle (4) und auf dem festen Teil (43a) des Kranzes (43) erfolgt, dass die Felge (2) vorläufig an den Enden der Sprossen (7) befestigt wird, und dann die Sprossen nacheinander durch die Sektoren (3) ersetzt werden, bis die Scheibe ganz ausgestattet ist.

17. Verfahren zum Warten einer Vorrichtung nach Anspruch 7 und 10, **dadurch gekennzeichnet, dass** man die Sektoren (3) installiert, indem man sie parallel zur Ebene der Scheibe (1) bringt, anschließend ihre unteren Enden mit einer leichten Neigung im Verhältnis zu der Ebene in die Stichleitungen (4) einführt und sie dabei zum Innern der Felge (2) umklappt, und indem die Stutzen (30) mit dem Kranz (43) in Eingriff gebracht werden, die Sektoren an der Felge (2) über die Verbindungsflansche (5) und die Schnellverschlüsse (6) verriegelt werden, und dann der abnehmbare Teil (43b) auf dem festen Teil (43a) des Kranzes montiert wird.

18. Verfahren nach Anspruch 17, **dadurch gekennzeichnet, dass** der abnehmbare Teil (43b) des Kranzes gelöst wird, die Verbindungsflansche (5) freigegeben werden, die den zu ersetzenden Sektoren entsprechen, die Sektoren anschließend einer nach dem anderen entnommen werden, indem sie geringfügig geneigt werden, und indem die Ansätze (33) aus den Stichleitungen (40) herausgenommen werden, wobei zusammen nach und nach neue Sektoren installiert werden, so dass die Felge (2) ständig festgehalten bleibt.
